Europäisches Patentamt

European Patent Office

Office européen des brevets

(19)

(11) Veröffentlichungsnummer: **0 307 573 B1**

(12) **EUROPÄISCHE PATENTSCHRIFT**

(45) Veröffentlichungstag der Patentschrift: 11.12.91      (51) Int. Cl.⁵: **B24B 37/04**

(21) Anmeldenummer: 88111179.3

(22) Anmeldetag: 13.07.88

(54) **Hon-, Läpp- oder Poliermaschine.**

(30) Priorität: 14.09.87 DE 3730795

(43) Veröffentlichungstag der Anmeldung:
22.03.89 Patentblatt 89/12

(45) Bekanntmachung des Hinweises auf die
Patenterteilung:
11.12.91 Patentblatt 91/50

(84) Benannte Vertragsstaaten:
CH DE FR GB IT LI

(56) Entgegenhaltungen:
CH-A- 618 375
DE-A- 2 445 100

PATENT ABSTRACTS OF JAPAN Band 9, Nr.
51 (M-361)(1774), 6, März 1985; & JP - A - 59
187 447 (TOSHIBA K.K.) 24.10.1984

PATENT ABSTRACTS OF JAPAN Band 8, Nr.
69 (M-286)(1506), 31 Mäarz 1984; & JP - A - 58
217 268 (SUPIIDO FUAMU K.K.) 17.12.1983

PATENT ABSTRACTS OF JAPAN Band 9, Nr.
229 (M-413)(1952), 14. September 1985; & JP
- A - 60 85862 (FUJIKOSHI KIKAI KOGYO K.K.)
15.05.1985

(73) Patentinhaber: **PETER WOLTERS AG**
**Büsumer Strasse 96**
**W-2370 Rendsburg(DE)**

(72) Erfinder: **Wittstock, Gerhard**
**Heidredder 32**
**W-2082 Ütersen(DE)**

(74) Vertreter: **Graalfs, Edo, Dipl.-Ing. et al**
**Patentanwälte Dipl.-Ing. H. Hauck; Dipl.-Phys.**
**W. Schmitz; Dipl.-Ing. E. Graalfs; Dipl.-Ing. W.**
**Wehnert; Dr.-Ing. W. Döring; Heidi Reichert,**
**Rechtsanwalt Neuer Wall 41**
**W-2000 Hamburg 36(DE)**

## Beschreibung

Die Erfindung bezieht sich auf eine Hon-, Läpp- oder Poliermaschine nach dem Oberbegriff des Patentanspruchs 1.

Derartige Maschinen werden bekanntlich für eine hochfeine Oberflächenbearbeitung eingesetzt, zum Beispiel z.T. zur Bearbeitung von Wafers für Mikrochips oder dergleichen. Die Werkstücke werden von Werkstückaufnahmescheiben aufgenommen, die entsprechende Aufnahmeöffnungen hierfür aufweisen. Bei den gängigen Maschinen wälzen sich die Werkstückaufnahmescheiben nach Art von Planetenrädern zwischen einem Außenkranz und einem Innenkranz in der Arbeitsebene von oberer und unterer Arbeitsscheibe ab. Der zentrale Innenkranz wird normalerweise angetrieben, während der Außenkranz meist in Drehrichtung festgelegt ist. Die Werkstückaufnahmescheiben haben normalerweise eine Stirnverzahnung, während Innen- und Außenkranz Stifte oder Zähne aufweisen. Es ist jedoch aus der DE-OS 36 24 878 bekanntgeworden, auf einem Kreis angeordnete Werkstückaufnahmescheiben über ein Ritzel anzutreiben, das seinerseits in Eingriff mit einem Zentralrad steht. Dem Umfang der Werkstückaufnahmescheiben sind weitere Zahnräder zugeordnet, die der Lagerung dienen. Die Werkstückaufnahmescheiben werden mithin um eine feste Achse gedreht. Die Aufnahmeöffnung der Werkstückaufnahmescheiben ist hingegen exzentrisch angeordnet, so daß sie bei Umdrehung der Werkstückaufnahmescheiben ihrerseits eine Kreisbahn beschreibt.

Die zuletzt beschriebene bekannte Maschine mag zwar Vorteile aufweisen, sie ist jedoch auch mit etlichen Nachteilen behaftet. Die bekannte Maschine erfordert eine große Anzahl von Lagerstellen. Da während des Honens, Läppens oder Polierens mit einem abrasiven Medium gearbeitet wird, ist es problematisch diese Lagerstellen zu schützen und sie damit vor Beeinträchtigung zu bewahren.

Bei der bekannten Maschine ist die Anzahl der Zähne des zentralen Zahnrades gleich einem ganzen Vielfachen der Anzahl der Zähne der Werkstückaufnahmescheiben. Der Welle des Zentralrades ist eine Reihe von Nocken zugeordnet, die während der Wellenumdrehung gezählt werden. Werden die Werkstückaufnahmescheiben in vorgebener Drehlage eingesetzt, läßt sich mit Hilfe der Nockenanordnung die jeweilige Drehlage der Werkstückaufnahmescheiben ermitteln. Damit sind auch die Koordinaten der Werkstückaufnahmeöffnungen in den Aufnahmescheiben bekannt. Diese können einem Roboter vorgegeben werden, der dadurch die Werkstücke aus den einzelnen Werkstückaufnahmescheiben entfernen oder diese mit neuen Werkstücken beladen kann. Die Koordinaten für die Werkstückaufnahmeöffnungen müssen jedoch verhältnismäßig genau vorgegeben sein, da sonst vor allen Dingen beim Beladen eine Beeinträchtigung oder gar Zerstörung der Werkstücke zu befürchten ist. Diese Genauigkeit ist jedoch beeinträchtigt dadurch, daß die Werkstückaufnahmescheiben während des Betriebs vor allem im Bereich der Verzahnung einem Verschleiß unterliegen. Dem Verschleiß sind im übrigen auch die anderen Zahnräder ausgesetzt. Dadurch entsteht eine Lose der Werkstückaufnahmescheiben im Hinblick auf ihren Antrieb. Die präzise Lage der Werkstückaufnahmescheiben in der Be- und Entladeposition ist dadurch nicht reproduzierbar gesichert. Außerdem muß die Be- und Entladevorrichtung in bezug auf jede Aufnahmescheibe ausgerichtet werden, was eine komplizierte Ladeeinrichtung und eine aufwendige Steuerung erfordert.

Der Erfindung liegt daher die Aufgabe zugrunde, eine herkömmliche Hon-, Läpp- oder Poliermaschine so zu verbessern, daß die Werkstücke mit einer Ladeeinrichtung auf einfache Weise in die Werkstückaufnahmescheiben eingelegt und aus diesen entnommen werden können.

Diese Aufgabe wird erfindungsgemäß gelöst durch die Merkmale des Kennzeichnungsteils des Patentanspruchs 1.

Bei der erfindungsgemäßen Maschine ist die Zahl der Stifte oder Zähne des Außenkranzes ein ganzzahliges Vielfaches der Zahl der Zähne der Aufnahmescheibe. Dieses Zahlenverhältnis stellt sicher, daß jeder Zahn der Werkstückaufnahmescheiben reproduzierbar die gleiche Bahn beschreibt, wenn sich die Werkstückaufnahmescheibe zwischen Innen- und Außenkranz abwälzt. Mit anderen Worten, eine bestimmte Stelle oder ein Zahn der Werkstückaufnahmescheibe erscheint im Hinblick auf einen ortsfesten Punkt stets an der gleichen Stelle. Bezüglich eines außerhalb der Umlaufbahn der Aufnahmescheiben angeordneten Positionsfühlers nähert sich z.B.ein bestimmter Zahn der Werkstückaufnahmescheiben dem Positionsfühler am meisten. Wird diese Position mit Hilfe des Positionsfühlers erfaßt, ist es möglich, durch ein Stoppsignal an den Antriebsmotor die Werkstückaufnahmescheiben stets in die gleiche Lage und die gleiche Drehlage zu bringen. Spricht der Postionsfühler auf eine bestimmte Stelle der Werkstückaufnahmescheibe an und ermittelt er zum Beispiel die maximale Nähe dieser signalgebenden Stelle der Werkstückaufnahmescheibe und führt ein entsprechendes Fühlersignal zu einem Stopp des Antriebs, wird die Werkstückaufnahmescheibe immer an gleicher Stelle mit vorgegebener Drehlage angehalten. Eine Werkstückbelade- und Entnahmevorrichtung kann daher gezielt in Stellung oberhalb der Werkstückaufnahmescheibe gebracht werden und die Werkstücke entnehmen bzw. neue Werkstücke einführen, ohne daß ein besonderer Suchvorgang erforderlich ist.

Der Positionsfühler kann induktiv, kapazitiv, optoelektronisch oder mechanisch arbeiten und mit einer beliebigen Stelle der Werkstückaufnahmescheibe zusammenwirken. Besonders vorteilhaft ist, wenn der Positionsfühler mit den Zahnköpfen der Aufnahmescheibenverzahnung zusammenwirkt, da diese während des Betriebs nicht verschleißen.

Abhängig von der Art und dem Einsatz des Positionsfühlers kann ein bestimmter Zahn der Verzahnung der Aufnahmescheiben in besonderer Weise ausgeführt werden. Er kann zum Beispiel eine besondere geometrische Form haben, etwa länger sein als die übrigen oder mit einer entsprechenden Ausnehmung versehen, wodurch er auf besonders einfache Weise von einem mechanisch arbeitenden Fühler erfaßt werden kann. Er kann jedoch auch mit einer besonderen Oberfläche versehen werden oder einen Initiator enthalten, der zum Beispiel in der Lage ist, ein magnetisches Feld zu beeinflussen. Werkstückaufnahmescheiben bestehen vielfach aus Kunststoff. Es ist daher denkbar, in einen Zahn ein Metallstückchen einzubetten, auf das das Feld des Positionsfühlers reagiert. Auch beim optoelektronischen Fühler kann der Zahn eine bestimmte geometrische Form aufweisen oder in besonderer Weise gefärbt sein, um eine Ansprache durch ein lichtempfindliches Element oder dergleichen herbeizuführen.

Der Positionsfühler ist nach einer weiteren Ausgestaltung der Erfindung mit einer Positioniereinheit verbunden zur Verstellung des Fühlers von einer zurückgezogenen Ruheposition in eine Meßposition und umgekehrt. Dadurch ist es möglich, den Fühler sehr nah an den Außenumfang der Werkzeugaufnahmescheibe vorübergehend heranzuführen, um eine genaue Messung durchzuführen. Sobald der Meßvorgang beendet ist, wird der Positionsfühler von der Positioniereinheit wieder in die Ruheposition gebracht, damit er im nächsten Zyklus außerhalb der Umlaufbahn der Aufnahmescheiben liegt und nicht beschädigt oder den Verunreinigungen nicht so ausgesetzt wird.

Nach einer weiteren Ausgestaltung der Erfindung ist vorgesehen, daß die Zähne- bzw. Stiftzahl des Innen- und Außenkranzes durch die Stückzahl der Aufnahmescheiben in der Arbeitsebene ganzzahlig teilbar ist. Dadurch läßt sich zwischen den Werkstückaufnahmescheiben ein konstanter Abstand einhalten, so daß die Koordinaten bzw. die Drehlage aller Werkstückaufnahmescheiben bekannt sind, wenn die entsprechenden Daten mit Hilfe des Positionsfühlers für eine Werkstückaufnahmescheibe ermittelt wurden.

Um eine genauere Messung vornehmen zu können, sieht eine Ausgestaltung der Erfindung vor, daß der Antriebsmotor in einen Schleichgang schaltbar ist und die Steuerschaltung den Positionsfühler aktiviert, wenn der Antriebsmotor, ggf. nach vorübergehendem Stillstand, in den Schleichgang geschaltet wird. Der Schleichgang erlaubt auch ein präziseres Abbremsen des Antriebs.

Eine weitere Ausgestaltung der Erfindung sieht vor, daß außerhalb der Umlaufbahn der Aufnahmescheiben ein weiterer Positionsfühler vorgesehen ist, der ein Aktivierungssignal für den ersten Positionsfühler oder die erste Positioniereinheit erzeugt, wenn die Aufnahmescheibe eine vorgegebene Relativlage zum weiteren Positionsfühler einnimmt. Der weitere Positionsfühler ist vorzugsweise in Abwälzrichtung vor dem ersten angeordnet und ermittelt beispielsweise den Eingriff der Zahnung einer Werkstückaufnahmescheibe mit der Zahnung oder den Stiften des Außenkranzes. Da, wie bereits erwähnt, an der Stelle des Positionsfühlers stets die gleichen Zähne mit dem Außenkranz in Eingriff treten, läßt sich mit Hilfe des weiteren Positionsfühlers eine Grob-Positionsermittlung durchführen. Der erste Positionsfühler wird nach einem Meßvorgang des zweiten Positionsfühlers aktiviert und stellt dann die präzise Lage der Werkstückaufnahmescheibe fest und gibt ein Stoppsignal für den Antriebsmotor, um die Aufnahmescheibe in der ermittelten Position anzuhalten.

Erster und/oder zweiter Positionsfühler können auf verschiedene Art und Weise am Arbeitsbereich der erfindungsgemäßen Maschine angebracht werden. Besonders vorteilhaft ist ihre Anbringung am Außenkranz.

Auch bei der erfindungsgemäßen Maschine kann durch Abrieb eine Lose zwischen dem Zentralrad und der Zahnung der Werkstückaufnahmescheiben entstehen. Eine Ausgestaltung der Erfindung sieht vor, daß außerhalb der Umlaufbahn der Werkstückaufnahmescheiben eine Ausrichtvorrichtung angeordnet ist, die die Aufnahmescheiben radial ausrichtet, wenn sie ihre vorgegebene Relativlage erreicht haben. Vorzugsweise wirkt die Ausrichtvorrichtung mit dem Kopfdurchmesser der Aufnahmescheibenverzahnung zusammen. Hierdurch ist sichergestellt, daß die Aufnahmescheiben reproduzierbar eine präzise Lage einnehmen, wenn der Antrieb, gesteuert durch die Positionsfühler, den Abwälzvorgang beendet, weil am Außendurchmesser der Aufnahmescheiben kein Verschleiß eintritt.

Wie ebenfalls bereits erwähnt, ist durch entsprechende Zähnezahl möglich, mit der Positionsbestimmung einer Werkstückaufnahmescheibe auch die Lagedaten der anderen Scheiben zu ermitteln. Für eine Werkstückbelade- und Entnahmevorrichtung bedeutet dies jedoch, daß ihr Kopf in einer Ebene parallel zur Ebene der Arbeitsscheiben zweidimensional verstellt werden muß. Dies erfordert einen erheblichen apparativen Aufwand. Es ist daher nach einer Ausgestaltung der Erfindung zweckmäßiger, nach und nach die Position einzelner Aufnahmescheiben zu bestimmen. Diese nehmen daher jeweils die gleiche Lage ein, so daß der Kopf der Belade- und Entnahmevorrichtung ausschließlich linear verstellt werden muß, um seine Operationen durchzuführen.

Bei dem zuletzt beschriebenen Verfahren würde es unter Umständen einige Zeit in Anspruch nehmen, die Aufnahmescheibe in der Ent- und Beladeposition zu positionieren, um die Aufnahmescheibe mit neuen Werkstücken ent- und beladen zu können. Eine alternative Ausgestaltung des erfindungsgemäßen Verfahrens sieht daher vor, das Positionieren der Aufnahmescheibe zu einer Zeit durchzuführen, während der die bearbeiteten Werkstücke abgelegt und die unbearbeiteten Werkstücke der Ladevorrichtung zum Beladen aufgenommen werden. Dies kann etwa dadurch geschehen, daß der Kopf der Belade- und Entladevorrichtung nach dem Beladen einer Aufnahmescheibe in der Beladeposition zur benachbarten Aufnahmescheibe fährt und deren Werkstücke entnimmt. Ist der Kopf mit flächigen Greif- und Haltemitteln versehen, spielen die Relativlage des Kopfes und Position der einzelnen Aufnahmeöffnungen in der Aufnahmescheibe keine Rolle. Die aufgenommenen Werkstücke werden außerhalb der Maschine abgelegt. Der Kopf erfaßt dann bereitgehaltene Werkstücke und transportiert sie zur zuvor entladenen Aufnahmescheibe, die inzwischen in die Beladeposition weitergefahren wurde. Ein derartiges Verfahren ist verhältnismäßig zeitsparend. Für die Durchführung erfordert es einen ebenfalls nur gradlinig verstellbaren Kopf. Vorzugsweise erstreckt sich die Verstellachse des Kopfes durch die Mitten zweier benachbarter Aufnahmescheiben, von denen mindestens eine jeweils in der präzisen Beladeposition angeordnet ist. Es versteht sich, daß bei diesem Verfahren die Aufnahmescheiben voneinander einen konstanten Abstand aufweisen müssen.

Die Erfindung wird nachfolgend anhand von Zeichnungen näher erläutert.

Fig. 1  zeigt teilweise im Schnitt die Seitenansicht einer schematisch dargestellten Honmaschine.

Fig. 2  zeigt die Draufsicht auf die untere Arbeitsscheibe mit Werkzeugaufnahmescheiben und ihrem Antrieb in schematischer Darstellung.

Fig. 3  zeigt vergrößert die Einzelheit X nach Fig. 2.

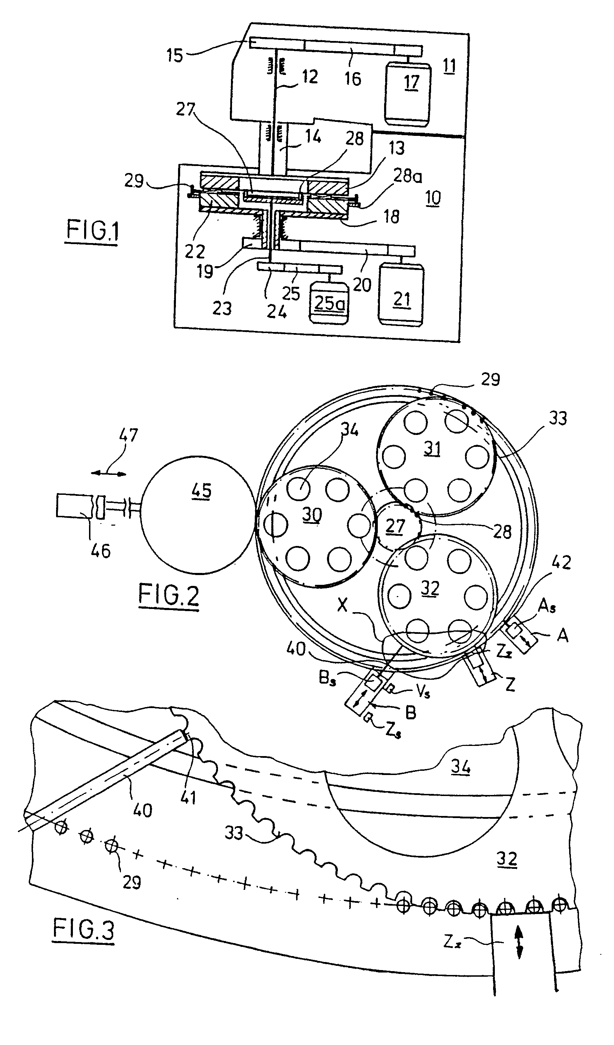

Die in Fig. 1 gezeigte Honmaschine weist ein Grundgestell 10 auf sowie ein Oberteil 11, das um eine vertikale Achse vom Grundgestell 10 schwenkbar gelagert ist. Eine im Oberteil 11 gelagerte Welle 12 treibt eine obere Arbeitsscheibe 13 an. Mit Hilfe einer nicht dargestellten Einrichtung ist die Arbeitsscheibe 13 im Maschinenbereich 14 außerdem höhenverstellbar. Auf der Welle 12 sitzt ein Rad 15, das über einen Riemenantrieb 16 vom Antriebsmotor 17 angetrieben ist.

Eine Trägerscheibe 18 ist drehbar im Grundgestell 10 gelagert. Seine hohle Welle ist mit einem Antriebsrad 19 versehen, das über einen Riementrieb 20 von einem Antriebsmotor 21 angetrieben ist. Auf der Trägerscheibe 18 ruht die untere Arbeitscheibe 22. Durch die hohle Welle der Trägerscheibe 18 erstreckt sich eine Rolle 23. Auf der Welle 23 sitzt ein Antriebsrad 24, das über einen Riementrieb 25 von einem Antriebsmotor 25a angetrieben ist. Auf der Welle 23 sitzt ein Zentralrad 27, das einen sogenannten Innenkranz 28 aufweist, der von einem Kranz von Stiften gebildet ist. Ein stationärer Ring 28a lagert einen Außenkranz 29, der von einem Stiftkranz gebildet ist. Der Stiftkranz 29 ist in seiner Höhe relativ zur Arbeitsscheibe 22 verstellbar. Wie aus Fig. 2 zu erkennen, liegen auf der Arbeitsseite der unteren Arbeitsscheibe 22 drei Werkstückaufnahmescheiben 30, 31, 32. Sie bestehen normalerweise aus Kunststoffmaterial oder Stahl und weisen eine Stirnverzahnung 33 auf. Die Stirnverzahnung ist in Eingriff mit dem Stiftkranz 29 und der Stiftkranz 28 des Zentralrads 27. Die Werkstückaufnahmescheiben 30 bis 32 weisen Werkstückaufnahmeöffnungen 34 auf zur Aufnahme von Werkstücken, die hier nicht gezeigt sind. Die bisher beschriebenen Einzelheiten sind Bestandteile herkömmlicher Hon-, Läpp- und Poliermaschinen.

Wird das Zentralrad 27 angetrieben, wälzen sich die Aufnahmescheiben 30 bis 32 am Außenkranz 29 ab und drehen sich dabei um ihre eigene Achse. Jede Werkstückaufnahmeöffnung oder -aufnahmetasche 34 beschreibt dabei eine Zykloide. Die Zähnezahl des Außenkranzes 29 ist nun ein ganzzahliges Vielfaches der Zähnezahl der Scheibenverzahnung 33. Dies hat zur Folge, daß die Aufnahmescheiben 30 bis 32 in bezug auf einen Festpunkt immer die gleiche Drehlage einnehmen. Mit anderen Worten, ein Zahn einer Aufnahmescheibe 30 bis 32 betrachtet, hat bezüglich eines Stiftes des Außenkranzes 29 stets die gleiche Beziehung, oder anders gesagt, ein Zahn einer Aufnahmescheibe greift immer zwischen die gleichen benachbarten Stifte eines Außenkranzes. Ist außerdem die Zahl der Zähne des Außenkranzes 29 und des Innenkranzes 28 durch die Zahl der Aufnahmescheiben 30 bis 32 ganzzahlig teilbar, lassen sich zwischen den Aufnahmescheiben gleichbleibende Abstände herstellen und einhalten.

Ein erster Positionsfühler in Form eines Fühlstifts 40 ist außerhalb des Außenkranzes 29 diesem zugeordnet. Er ist mit einer Positioniereinheit B verbunden zur Verstellung gemäß Doppelpfeil zwischen einer hinteren Ruheposition und einer vorderen Meßposition. Die beiden Positionen werden er-

mittelt durch Endschalter $Z_s$ und $V_s$. In der Positioniereinheit ist der Fühlstift 40 mit einem Schalter $B_s$ verbunden. Der Fühlstift 40 spricht auf den Zahn 41 der Verzahnung der Scheibe 32 an, da nur Zahn 41 stets an der Stelle erscheint, an der sich das Ende des Fühlstifts 40 befindet, um diesen geringfügig zu verstellen. Der Schalter $B_s$ registriert die Verstellung des Fühlstiftes und gibt ein entsprechendes Positionssignal an eine nicht gezeigte Steuerschaltung zwecks Abschaltung des Antriebsmotors 25a.

Im Umfangsabstand zur ersten Positioniereinheit B ist eine zweite Positioniereinheit A angeordnet mit einem Schalter $A_s$, der einen Fühlstift 42 aufweist. Der Schalter $A_s$ ist ebenfalls radial entsprechend dem Doppelpfeil verstellbar. Der Schalter $A_s$ enthält einen Fühlmechanismus, der die Berührung des Fühlstiftes 42 mit der Zahnung 33 der Scheiben 30 bis 32 registriert.

Zwischen den Positioniereinheiten B und A ist eine Ausrichtvorrichtung Z angeordnet, die ein Ausrichtelement $Z_z$ aufweist, das entsprechend dem Doppelpfeil radial relativ zur Achse des Zentralrads 27 verstellbar ist. Bei Betätigung greift das Ausrichtelement $Z_z$ an den Köpfen der Zähne der Scheibenverzahnung 33 an.

In Fig. 2 ist auch eine Belade- und Entnahmevorrichtung schematisch dargestellt, die einen Kopf 45 aufweist, der mit Hilfe einer Verstelleinrichtung 46 in Richtung des Doppelpfeils 47 verstellbar ist. Bei angehobener Arbeitsscheibe 13 kann der Kopf 45 über die Arbeitsscheibe 22 fahren und Werkstücke in die Taschen 34 einlegen oder aus aus diesen entnehmen. Es versteht sich, daß der Kopf 45 bezüglich jeder anderen Arbeitsscheibe in der beschriebenen Weise wirkt, wenn sie die Position der Scheibe 30 einnimmt. Außerdem kann der Kopf 45 auch der Position zugeordnet werden, welche von der Scheibe 32 als eingenommen gezeichnet ist. Die Belade- und Entnahmevorrichtung ist ausschließlich aus darstellerischen Gründen in der gezeigten Position veranschaulicht.

Für die Beschreibung der Wirkungsweise der gezeigten Maschine sei angenommen, daß sich in den Aufnahmetaschen 34 Werkstücke befinden und diese fertig bearbeitet sind. Die Antriebsmotoren 17, 21, 25a werden abgeschaltet, und die obere Arbeitsscheibe 13 wird angehoben und weggeschwenkt. Dieser Vorgang löst in der nicht gezeigten Steuerschaltung ein Signal für die Verstellglieder der zweiten Positionseinheit A und der Ausrichtvorrichtung Z aus. Danach wird der Antriebsmotor 25a erneut eingeschaltet. Dadurch werden die Werkzeugaufnahmescheiben 30 bis 32 erneut angetrieben, was zu einem Ansprechen des Fühlerstifts 42 führt, wenn die Scheibe 32 eine vorgegebene Lage erreicht hat. In Fig. 2 hat dieser Vorgang kurz zuvor stattgefunden. Das Aktivierungssignal vom Fühlstift 42 bewirkt in der Steuerschaltung, daß der Antriebsmotor 25a in Schleichgang geschaltet wird. Außerdem verstellt die Positioniereinheit B den Fühlstift 40 in die Meßposition. Das Erreichen der Meßposition wird vom Grenzschalter $V_s$ ermittelt. Die langsam angetriebene Aufnahmescheibe 32 betätigt den Fühlstift 40. Das Ausgangssignal vom Schalter $B_s$ führt zu einem sofortigen Stopp des Antriebsmotors 25a, der zweckmäßigerweise mit einer wirksamen Bremse versehen ist. Nach dem Abschalten des Antriebsmotors 25a wird der Fühlstift 40 in die Ruheposition zurückverstellt. Dies wird durch Endschalter $Z_s$ registriert. Durch Aktivierung des Ausrichtelements $Z_z$ ist außerdem die Gewähr gegeben, daß auch bei großem Spiel in der Verzahnung eine genau definierte Positions der Aufnahmescheibe in radialer Richtung eingehalten werden kann, weil das Ausrichtelement $Z_z$ am Außendurchmesser der Aufnahmescheibe angreift, der praktisch keinem Verschleiß unterliegt. Mit Hilfe der Entnahmevorrichtung bzw. des Kopfes 45 der Entnahmevorrichtung können nunmehr die Werkstücke aus den Taschen 34 der Scheibe 32 entnommen werden. Die Lage der Taschen 34, die auf einem Kreis angeordnet sind, ist bei jeder neuen Positionsbestimmung der Scheibe 32 und dem unmittelbar darauffolgenden Beenden des Abwälzvorgangs reproduzierbar die gleiche, so daß die entsprechenden Greifvorrichtungen im Kopf 45, wenn sie einmal darauf einjustiert sind, immer wieder zu den Taschen 34 ausgerichtet sind. Die Belade- und Entnahmevorrichtung kann daher sehr einfach aufgebaut werden. Der Kopf 45 braucht lediglich linear verstellt zu werden. Eine Verdrehung bzw. Verschwenkung ist nicht erforderlich. Sie kann jedoch vorgesehen sein, und zwar für solche Fälle, in denen bezüglich aller Aufnahmescheiben 30 bis 32 nur die Positionsbestimmung für eine Scheibe durchgeführt wird. Im oben beschriebenen Verfahren werden die Aufnahmescheiben 30 bis 32 nacheinander in eine vorgegebene Lage und Drehlage gebracht und entsprechend beladen bzw. entladen. Haben die Aufnahmescheiben eine vorgegebene Winkelbeziehung zueinander, genügt die Kenntnis der Lage und Drehlage einer Arbeitsscheibe, um Drehlage und Position der anderen Arbeitsscheiben ebenfalls zu kennen. Mit Hilfe eines geeigneten roboterartigen Gerätes können dann die einzelnen Aufnahmescheiben angefahren werden, um die Werkstücke einzulegen oder herauszunehmen.

Die in Fig. 2 dargestellte Belade- und Entladevorrichtung kann auch so ausgeführt werden, daß ihr Kopf 45 in der Lage ist, neben der Aufnahmescheibe in der Be- und Entladeposition auch eine benachbarte Aufnahmescheibe anzufahren. Dies geschieht zweckmäßigerweise in der Form, daß die Verstellachse durch die Mitten von zwei benachbarten Aufnahmescheiben 30, 31 bzw. 32 verläuft.

Das Be- und Entladen spielt sich dann wie folgt ab. Es sei angenommen, daß die Aufnahmescheibe 32 eine präzise Beladeposition eingenommen hat und keine Werkstücke enthält. Der Kopf 45 hat von einem Ort außerhalb der Honmaschine Werkstücke aufgenommen, und zwar in einer Anordnung und Orientierung, daß die Werkstücke zu den Aufnahmetaschen 34 in der Scheibe 32 präzise ausgerichtet sind, wenn sich der Kopf 45 oberhalb der Aufnahmescheibe 32 befindet. Die Werkstücke können nunmehr präzise in den Aufnahmetaschen 34 abgelegt werden. Nachdem dies geschehen ist, fährt der Kopf 45 zum Beispiel weiter zur Aufnahmescheibe 31, in der sich noch Werkstücke befinden. Die Greif- und Haltemittel des Kopfes 45 wirken flächenförmig, d.h. es ist nicht notwendig, daß die Werkstücke in bestimmter Orientierung anzuordnen sind, damit sie vom Kopf aufgenommen werden können. Die relativ genaue Lage der Aufnahmescheibe 31 ist bekannt. Hat der Kopf 45 diese Lage erreicht, können die Werkstücke aus den Aufnahmetaschen entnommen und im Anschluß daran außerhalb der Honmaschine abgelegt werden. Sobald dies geschehen ist, wird der Antriebsmotor 25a geschaltet,

so daß die Aufnahmescheibe 31 weiterbewegt wird, bis sie die präzise Beladeposition erreicht hat, die zuvor von der Aufnahmescheibe 32 eingenommen wurde.In dieser Beladeposition wird dann die Aufnahmescheibe mit Werkstücken beladen, wobei im Anschluß daran die Werkstücke aus der benachbarten Aufnahmescheibe entnommen werden. Ein derartiges Verfahren stellt eine zeitliche Optimierung des Be- und Entladens mit Werkstücken dar bei größter Einfachheit der Be- und Entladevorrichtung. Der Kopf 45 braucht lediglich entlang einer Achse verstellt und ausgerichtet zu werden.

**Patentansprüche**

1.  Hon-, Läpp- oder Poliermaschine, mit einer oberen und einer unteren Arbeitsscheibe (13, 22), in deren Arbeitshöhe ein Stifte oder Zähne aufweisender Außenkranz (29), ein zentraler, von einem Antriebsmotor drehend angetriebener Stifte oder Zähne aufweisender Innenkranz (27) und zwischen den Arbeitsscheiben Werkstückaufnahmescheiben (30, 31, 32) angeordnet sind, wobei die Werkstückaufnahmescheiben nach Art eines Planetengetriebes als eine Stirnverzahnung aufweisende Planetenräder mit den Stiften oder Zähnen von Außen- und Innenkranz in abwälzenden Eingriff bringbar sind und Aufnahmeöffnungen (34) für die Werkstücke aufweisen, bei der ferner der Antriebsmotor (25a) eine Steuerschaltung sowie eine Bremse aufweist, wobei der Antriebsmotor abgeschaltet und die Bremse eingeschaltet wird, wenn die Steuerschaltung ein entsprechendes Stoppsignal abgibt und bei der eine Belade- und Entladevorrichtung vorgesehen ist mit einem Kopf (45), der zum Einsetzen von Werkstücken in die Aufnahmescheiben und zum Entnehmen der Werkstücke aus den Aufnahmescheiben in eine Position oberhalb mindestens einer Aufnahmescheibe verfahrbar ist, dadurch gekennzeichnet, daß die Stifte oder Zähnezahl des Außenkranzes (29) ein ganzzahliges Vielfaches der Stifte oder Zähnezahl der Aufnahmescheibe (30, 31, 32) ist, außerhalb der Umlaufbahn der Aufnahmescheiben (30, 31, 32) ein Positionsfühler (40) vorgesehen ist, der ein Positionssignal erzeugt, wenn eine Aufnahmescheibe (30, 31, 32) eine vorgegebene Relativlage zum Fühler (40) einnimmt und die Steuerschaltung das Stoppsignal erzeugt, wenn sie das Positionssignal erhält.

2.  Maschine nach Anspruch 1, dadurch gekennzeichnet, daß der Fühler (40) mit einer Positioniereinheit (B) verbunden ist zur Verstellung des Fühlers (40) von einer zurückgezogenen Ruheposition in eine ausgefahrene Meßposition und umgekehrt.

3.  Maschine nach einem der Ansprüche 1 und 2, dadurch gekennzeichnet, daß die Zähne- bzw. Stiftzahl des Innen- und Außenkranzes durch die Stückzahl der Aufnahmescheiben (30, 31, 32) ganzzahlig teilbar ist.

4.  Maschine nach einem der Ansprüche 1 bis 3, dadurch gekennzeichnet, daß der Antriebsmotor (25a) in den Schleichgang schaltbar ist und die Steuerschaltung den Positionsfühler (40) aktiviert, nachdem der Antriebsmotor (25a) ggf. nach vorübergehendem Stillstand in den Schleichgang geschaltet ist.

5.  Maschine nach Anspruch 2 und 3, dadurch gekennzeichnet, daß die Positioniereinheit (B) den Positionsfühler (40) in die Meßposition verstellt, wenn der Antriebsmotor (25a) ausgeschaltet ist oder nachdem er in den Schleichgang geschaltet ist.

6.  Maschine nach einem der Ansprüche 1 bis 5, dadurch gekennzeichnet, daß außerhalb der Umlaufbahn der Aufnahmescheiben (30, 31, 32) ein weiterer Positionsfühler (42) vorgesehen ist, der ein Aktivierungssignal für den ersten Positionsfühler (40) oder seine Positioniereinheit (B) erzeugt, wenn die Aufnahmescheibe (30, 31, 32) eine vorgegebene Relativlage zum weiteren Positionsfühler (42) einnimmt.

7. Maschine nach Anspruch 2 und 6, dadurch gekennzeichnet, daß die Positioniereinheit (B) den ersten Positionsfühler (40) in die Meßposition verstellt, wenn der zweite Positionsfühler (42) das Aktivierungssignal erzeugt.

8. Maschine nach einem der Ansprüche 1 bis 7, dadurch gekennzeichnet, daß erster und zweiter Positionsfühler (40, 42) am Außenkranz (29) angebracht sind.

9. Maschine nach einem der Ansprüche 1 bis 8, dadurch gekennzeichnet, daß der Positionsfühler (40, 42) auf den Kopf eines Zahns anspricht.

10. Maschine nach anspruch 9, dadurch gekennzeichnet, daß ein Zahn der Aufnahmescheiben eine besondere geometrische Form oder Oberfläche aufweist, ein besonders als Initiator dienendes Element enthält, das gegebenenfalls aus einem anderen Werkstoff besteht oder aus einem anderen Werkstoffgefüge als der andere Teil der Aufnahmescheiben.

11. Maschine nach einem der Ansprüche 1 bis 9, dadurch gekennzeichnet, daß außerhalb der Umlaufbahn der Antriebsscheiben (30, 31, 32) eine Ausrichtvorrichtung (Z) angeordnet ist, die die Aufnahmescheiben (30, 31, 32) bevorzugt radial ausrichtet, vorzugsweise wenn sie ihre Relativlage erreicht haben.

12. Maschine nach Anspruch 11, dadurch gekennzeichnet, daß die Ausrichtvorrichtung (Z) am Kopfdurchmesser der Verzahnung (33) der Aufnahmescheiben (30, 31, 32) angreift.

13. Verfahren zum Be- und Entladen von Werkstücken, unter Verwendung einer Hon-, Läppoder Poliermaschine nach einem der Ansprüche 1 bis 11, dadurch gekennzeichnet, daß mit Hilfe des ersten und ggf. des zweiten Positionsfühlers die Relativlage bzw. die Belade- und Entladeposition einer ersten Aufnahmescheibe ermittelt wird, der voreingestellte, linear verstellbare Kopf der Be- und Entladevorrichtung über die erste Aufnahmescheibe gefahren wird zwecks Be- oder Entladens der Werkstücke, erster und ggf. zweiter Positionsfühler ermitteln, wenn eine zweite Aufnahmescheibe die Belade- oder Entladeposition, die vorher von der ersten Aufnahmescheibe eingenommen wurde, erreicht hat, der Kopf der Be- und Entladevorrichtung über die zweite Aufnahmescheibe gefahren wird zwecks Beladens oder Entladens von Werkstücken, usw.

14. Verfahren nach Anspruch 13, dadurch gekennzeichnet, daß die Beladeposition einer ersten Aufnahmescheibe ermittelt wird, der Kopf der Be- und Entladevorrichtung Werkstücke in die erste Aufnahmescheibe einlegt, daß durch weitere vorzugsweise lineare Verstellung des Kopfes der Be- und Entladevorrichtung Werkstücke aus einer benachbarten zweiten Aufnahmescheibe entnommen und außerhalb der Arbeitsscheiben abgelegt werden, daß nach dem Entladen der Werkstücke die zweite Aufnahmescheibe in die Beladeposition gefahren wird, die zuvor von der ersten Aufnahmescheibe eingenommen wurde, der Be- und Entladekopf weitere Werkstücke in die zweite Aufnahmescheibe einlegt usw.

15. Maschine zur Durchführung des Verfahrens nach Anspruch 13 oder 14, bei der der Kopf der Be- und Entladevorrichtung zwischen einer Be- und Entladeposition oberhalb der unteren Arbeitsscheibe und einer Ablage- und Aufnahmeposition außerhalb der Arbeitsscheibe verstellbar gelagert ist und Mittel aufweist zum Halten von Werkstücken, dadurch gekennzeichnet, daß der Kopf (45) der Be- und Entladevorrichtung an einem Arm oder dergleichen Haltevorrichtung gehalten ist und geradlinig verstellbar ist.

16. Maschine nach Anspruch 15, dadurch gekennzeichnet, daß die Verstellachse durch die Mitten von zwei Aufnahmescheiben in deren Be- und Entladeposition geht.

17. Maschine nach Anspruch 15, dadurch gekennzeichnet, daß der Kopf (45) flächenhaft wirkende Greif- und Haltemittel für die Werkstücke aufweist.

**Claims**

1. Honing, lapping or polishing machine comprising an upper and a lower working disc (13, 22), an outer gear member (29) including a number of pins or teeth and arranged at the working height of the working disc, a central inner gear member (27) rotated by a drive motor and including a number of pins or teeth, and a plurality of workpiece holder discs (30, 31, 32) disposed between said working discs, wherein the workpiece holder discs are adapted to be brought in meshing engagement with the pins or teeth of the outer and inner gear member in a planetary gear type fashion as planetary gear members having a spur toothing, the workpiece holder discs including recesses (34) for receiving workpieces, in which the drive motor (25a) includes a control circuit and a brake means, wherein the drive motor is deactivated and the brake means activated when the control circuit delivers a corresponding stop signal and in which a loading and an unloading means is provided including a head (45) which is moveable in a position above at least a holder disc for loading and unloading workpieces into and from the holder discs, characterized in that the number of pins or teeth of the outer gear member (29) is an integral multiple of the number of pins or teeth on the holder disc (30, 31, 32), that a position detector (40) is provided outside of the orbiting path of the holder discs (30, 31, 32) which posi-tion detector generates a position signal when a holder disk (30, 31, 32) takes a predetermined position relative to the position detector (40) and that the control circuit generates the stop signal when receiving the position signal.

2. The machine of claim 1, characterized in that the position detector (40) is connected to a positioning unit B for adjusting the detector (40) from a retracted rest position into an extended sensing position and vice versa.

3. The machine of one of claim 1 and 2, characterized in that the number of pins or teeth of the inner and outer gear member is an integral multiple of the number of holder discs (30, 31, 32).

4. The machine of one of claims 1 to 3, characterized in that drive motor (25a) may be operated in a slow motion mode and that the control circuit activates the position detector (40) after the drive motor (25a) - possibly following a temporary standstill - is operative in the slow motion mode.

5. The machine of claim 2 and 3, characterized in that the positioning unit B adjusts the position detector (40) in a sensing position when the drive motor (25a) is deactivated or operative in the slow motion mode.

6. The machine of one of claims 1 to 5, characterized in that outside the orbiting path of the holder discs (30, 31, 32) a further position detector (42) is provided which generates an activating signal for the first position detector (40) or its positioning unit B when the holder disc takes a predetermined position relative to the further position detector (42).

7. The machine of claim 2 and 6, characterized in that the position unit B adjusts the first position detector (40) into a sensing position when the second position detector (42) generates the activating signal.

8. The machine of one of claims 1 to 7, characterized in that the first and the second position detector (40, 42) is disposed on the outer gear member (29).

9. The machine of one of claims 1 to 8, characterized in that the position detector (40, 42) responds to the head of a tooth.

10. The machine of claim 9, characterized in that a tooth of the holding discs includes a particular geometrical shape or surface and includes an element serving as an initiator and is made from a material or is of a material structure different from that of the rest of the holder discs.

11. The machine of one fo claims 1 to 9, characterized in that outside the orbiting path of the holder discs (30, 31, 32) an aligning means Z is disposed for preferably radially aligning the holder discs (30, 31, 32), preferably when they have reached its relative position.

12. The machine of claim 11, characterized in that the aligning means Z are arranged to engage the head diameter of the toothing (33) of the holder discs (30, 31, 32).

13. A method of loading and unloading workpieces by using a honing, lapping or polishing machine according to one of claims 1 to 11, characterized in that the relative position or, respectively, the loading and unloading position of a first holder disc is determined by means of the first and possibly the second position detector, that the preadjusted and linearly adjustable head of the loading and unloading means is moved over the first holder disc for loading or unloading the workpieces, that the first and possibly the second position detector detect the arrival of a second holder disc at the loading or unloading position which position has been previously arrived by the first holder disc, and that the head of the loading and unloading means is moved over the second holder disc for loading or unloading workpieces and so on.

14. The method of claim 13, characterized in that the loading position of a first holder disc is determined, that the head of the loading and unloading means inserts workpieces in the first holder disc, that workpieces are received from an adjacent second holder disc by a further, preferably linear adjustment of the head of the loading and unloading means and that the workpieces are layed down outside the working discs, that after unloading the workpieces the second holder disc is moved into the loading position which has been previously taken by the first holder disc and that the loading and unloading head inserts further workpieces into the second holder disc and so on.

15. A machine for performing the method of claim 13 or 14, in which the head of the loading and unloading means is adjustably supported between a loading and unloading position above the lower working disc and a depositing and receiving position outside the working disc, including means for holding the workpieces, characterized in that the head (45) of the loading and unloading means is held on an arm of a holding means or the like and is linearly adjustable.

16. The machine of claim 15, characterized in that the adjusting axis extends through the centers of a pair of holder discs in its loading and unloading position.

17. The machine of claim 15, characterized in that the head (45) includes planarly acting gripping and holding means for the workpieces.

**Revendications**

1. Machine de pierrage, de rodage ou de polissage avec des plateaux de travail supérieur et inférieur (13, 22), sur la hauteur de travail desquels sont disposés une couronne extérieure (29) présentant des ergots ou des dents, une couronne intérieure (27) centrale présentant des ergots ou des dents et entraînée en rotation par un moteur de commande et des plateaux porte-pièces (30, 31, 32) qui sont situés entre les plateaux de travail, les plateaux porte-pièces pouvant être amenés en prise de roulement avec les ergots ou les dents des couronnes extérieure et intérieure suivant le mode d'un engrenage planétaire comme des roues planétaires présentant une denture frontale, et comportant des trous de chargement (34) pour des pièces,
dans laquelle en outre le moteur de commande (25a) est pourvu d'un circuit de commande ainsi que d'un frein, le moteur de commande étant arrêté et le frein actionné lorsque le circuit de commande fournit un signal d'arrêt correspondant,
et dans laquelle il est prévu un dispositif de chargement et de déchargement avec une tête (45) qui peut se déplacer vers une position au-dessus d'au moins un plateau porte-pièces pour mettre en place des pièces dans les plateaux porte-pièces et pour en extraire des pièces, caractérisée en ce que le nombre d'ergots ou de dents de la couronne extérieure (29) est un multiple entier du nombre d'ergots ou de dents des plateaux porte-pièces (30, 31, 32),
en ce qu'il est prévu à l'extérieur de la trajectoire des plateaux porte-pièces (30, 31, 32) un palpeur de position (40) qui produit un signal de position lorsqu'un plateau-porte pièces (30, 31, 32) prend une position relative donnée à l'avance par rapport au palpeur (40), et que le circuit de commande produit un signal d'arrêt lorsqu' il reçoit le signal de position.

2. Machine suivant la revendication 1, caractérisée en ce que le palpeur (40) est relié à une unité de positionnement (B) servant à déplacer le palpeur (40) d'une position en retrait, de repos, à une position avancée de mesure, et inversement.

3. Machine suivant l'une des revendications 1 et 2, caractérisée en ce que le nombre de dents ou d'ergots des couronnes intérieure et extérieure est divisible en nombres entiers par le nombre de pièces des plateaux porte-pièces (30, 31, 32).

4. Machine suivant l'une des revendications 1 à 3, caractérisée en ce que le moteur de commande (25a) peut être commuté en marche lente et que le circuit de commande active le palpeur de position (40) après que le moteur de commande (25a) ait été commuté en marche lente, le cas échéant après un arrêt temporaire.

5. Machine suivant la revendication 2 et 3, caractérisée en ce que l'unité de positionnement (B) déplace le palpeur de position (40) vers la position de mesure lorsque le moteur de commande (25a) est arrêté ou après qu'il ait été commuté en marche lente.

6. Machine suivant l'une des revendications 1 à 5, caractérisée en ce qu'il est prévu à l'extérieur de la trajectoire des plateaux porte-pièces (30, 31, 32) un autre palpeur de position (42) qui produit un signal d'activation pour le premier palpeur de position (40) ou son unité de positionnement (B) lorsque le plateau porte-pièces (30, 31, 32) prend une position relative donnée par rapport au second palpeur de posi-

tion (42).

7. Machine suivant les revendications 2 et 6, caractérisée en ce que l'unité de positionnement (B) déplace le premier palpeur de position (40) vers la position de mesure lorsque le second palpeur de position (42) produit le signal d'actication.

8. Machine suivant l'une des revendications 1 à 7, caractérisée en ce que les premier et second palpeurs de position (40, 42) sont montés sur la couronne extérieure (29).

9. Machine suivant l'une des revendications 1 à 8, caractérisée en ce que le palpeur de position (40, 42) réagit au sommet d'une dent.

10. Machine suivant la revendication 9, caractérisée en ce que l'une des dents des plateaux porte-pièces présente une surface ou une forme géométrique particulière, comprend un élément particulier servant de détecteur de proximité, qui se compose le cas échéant d'une autre matière ou d'une autre structure de matière que l'autre partie des plateaux porte-pièces.

11. Machine suivant l'une des revendications 1 à 9, caractérisée en ce qu'un dispositif d'ajustement (Z) est placé à l'extérieur de la trajectoire des plateaux porte-pièces (30, 31, 32), et aligne les plateaux porte-pièces (30, 31, 32) de préférence radialement, avantageusement lorsqu' ils ont atteint leur position relative donnée à l'avance.

12. Machine suivant la revendication 11, caractérisée en ce que le dispositif d'ajustement (Z) entre en contact avec le diamètre du sommet de la denture (33) des plateaux porte-pièces (30, 31, 32).

13. Procédé pour le chargement et le déchargement de pièces, dans le cadre de l'utilisation d'une machine de pierrrage, rodage ou polissage suivant l'une des revendications 1 à 11, caractérisé en ce que la position relative ou la position de chargement et de déchargement d'un premier plateau porte-pièces est détectée à l'aide du premier et le cas échéant du second palpeur de position, la tête préréglée, à déplacement linéaire, du dispositif de chargement et de déchargement est amenée au-dessus du premier plateau porte-pièces pour le chargement ou le déchargement des pièces, le premier et le cas échéant le second palpeur de position détectent lorsqu'un second plateau porte-pièces a atteint la position de chargement ou de déchargement préalablement occupée par le premier plateau porte-pièces, la tête du dispositif de chargement et de déchargement est amenée au-dessus du second plateau porte-pièces pour le chargement ou le déchargement de pièces, etc.

14. Procédé suivant la revendication 13, caractérisé en ce que quand la position de chargement d'un premier plateau porte-pièces est détectée, la tête du dispositif de chargement dépose des pièces dans le premier plateau porte-pièces, en ce qu'un autre déplacement, de préférence linéaire, de la tête du dispositif de chargement et de déchargement permet la prise de pièces dans un second plateau porte-pièces voisin et leur dépôt en dehors des plateaux de travail, en ce qu'après le déchargement des pièces le second plateau porte-pièces est amené à la position de chargement qui était occupée auparavant par le premier plateau porte-pièces, que le dispositif de chargement et de déchargement dépose d'autres pièces dans le second plateau porte-pièces, etc.

15. Machine pour la mise en oeuvre du procédé suivant la revendication 13 ou 14, dans laquelle la tête du dispositif de chargement et de déchargement est montée mobile entre une position de chargement et de déchargement au-dessus du plateau de travail inférieur et une position de dépôt et de prise à l'extérieur du plateau de travail et comporte des moyens pour maintenir les pièces, caractérisée en ce que la tête (45) du dispositif de chargement et de déchargement est montée sur un bras ou autre dispositif de maintien semblable et est mobile linéairement.

16. Machine suivant la revendication 15, caractérisée en ce que l'axe de déplacement passe par les centres de deux des plateaux porte-pièces dans leur position de chargement et de déchargement.

17. Machine suivant la revendication 15, caractérisée en de retenue à ce que la tête (45) présente des moyens de préhension et de retenue agissant dans un plan pour les pièces.

FIG.1

FIG.2

FIG.3